# EUROPEAN PATENT APPLICATION

(11) **EP 4 129 481 A1**
(43) Date of publication of application: **08.02.2023**
(21) Application number: 21382744.7
(22) Date of filing: 06.08.2021
(51) Int. Cl.: B01L 3/00, F16K 99/00

(54) **NORMALLY-CLOSED MONOLITHIC VALVE FOR MICROFLUIDIC APPLICATIONS**

(71) Applicant: Microliquid SL, 20500 Arrasate Mondragon, Gipuzkoa (ES)
(72) Inventor: VARELA LENIZ, Irene, 20500 Arrasate-Mondragón, Gipuzkoa (ES); GARCÍA DE MADINABEITIA MERINO, Pablo, 20500 Arrasate-Mondragón, Gipuzkoa (ES); LLOBERA ADAN, Andreu, 20500 Arrasate-Mondragón, Gipuzkoa (ES); FERNÁNDEZ LEDESMA, Luis, 20500 Arrasate-Mondragón, Gipuzkoa (ES)
(74) Representative: Tribalyte Ideas

(57) **Abstract**

The present invention relates to a normally-closed microfluidic valve comprising: a reservoir (1) adapted for storing a fluid (2); a fluidic outlet (3) adapted for its connection with the reservoir (1) in an open position of the valve; and a barrier (4) adapted for separating the reservoir (1) and the outlet (3) in a closed position of the valve. Advantageously, the barrier (4) is monolithically attached to the reservoir (1) and the outlet (3), forming part of the same structure thereof; and the barrier (4) is adapted such that it can be at least partly broken through delamination by an inlet threshold pressure value exerted by a compressed fluid (2) stored in the reservoir (1). The invention also relates to a microfluidic system comprising said valve in combination with a normally-open valve, and a manufacturing process of a normally-closed valve.

## Description

### FIELD OF THE INVENTION

The present invention relates to the field of microfluidics and microactuators. More specifically, the invention discloses a microfluidic monolithic valve, comprising a fluid reservoir connected to a microfluidic outlet through a separation wall. The separation wall can be advantageously ripped through its delamination by the effect of the fluid pressure inside the reservoir, thereby controllably releasing the fluid into the microfluidic outlet. The invention also relates to a microfluidic system comprising said monolithic valve, and to a manufacturing process thereof.

### BACKGROUND OF THE INVENTION

In the last decades, miniaturization of both electronic and non-electronic devices has emerged as an important field of research, leading to new technologies of microelectromechanical systems (MEMS), micromechanical actuators, and the so-called "miniaturized total analysis systems" (see A. Manz, N. Graber, and H. M. Widmer, "Miniaturized total chemical analysis systems: A novel concept for chemical sensing", Sensors Actuators B. Chem., vol. 1, no. 1-6, pp. 244-248, 1990). The evolution of such systems during these years has led to the development of a wide range of multifunctional microfluidic devices, such as "lab-on-a-chip" (LOC) devices (see T. Vilkner, D. Janasek, and A. Manz, "Micro Total Analysis Systems. Recent Developments", Anal. Chem., vol. 76, no. 12, pp. 3373-3386, June 2004). Among the main advantages that LOC systems provide, compared to macroscopic laboratory fluidic systems, are shortened analysis times, the need of lower amounts of chemical reagents, and higher reliability of processes. Nevertheless, the successful commercialization of LOC microsystems has been many times hampered by the absence of trustworthy fluidic control components like microvalves (see K. W. Oh and C. H. Ahn, "A review of microvalves," J. Micromechanics Microengineering, vol. 16, no. 5, May 2006*).*

To consider a microvalve as a reliable microfluidic actuator, it has to provide the microfluidic system with controlled features in terms of leakage flow, resistible pressure, biochemical compatibility, and disposability, being the latter of special interest for Point-of-Care (POC) microfluidic diagnostic applications (see *K. W. Oh and C. H. Ahn,* cited above). In this context, known microfluidic valves fall into two main categories: active microvalves, which rely on mechanical, non-mechanical or external actuation systems, and passive microvalves, which do not comprise mechanically actuated moving parts.

Traditional active-mechanical microvalves base their principle of operation on flexible membranes that can be mechanically moved by thermal, electrical, piezoelectric, or magnetic actuation methods, so as to enable or block the flow of fluid through a microfluidic channel. In contrast, non-mechanical active microvalves include movable membranes made of functionalized "smart" or "intelligent" materials. Additionally, externally actuated active microvalves comprise actuation means of external systems, like mechanical or pneumatic actuators. Moreover, depending on their default configuration, normally open (NO), normally closed (NC) or bistable microvalves can be distinguished.

Pneumatically actuated in-line microvalves have become a building block inside fluidic control microsystems. These valves typically comprise a pneumatic channel and a membrane that can be deformed under pressure, in order to block the flow of fluids of an in-line microchannel. An example of a typical configuration of a pneumatically actuated in-line microvalve is shown in M. A. Unger et al., "Monolithic microfabricated valves and pumps by multilayer soft lithography," Science, vol. 288, no. 5463, pp. 113-116, Apr. 2000*.* In said microvalve, two layers formed by a thermally curable elastomer (polydimethylsiloxane, PDMS) method are bonded together, creating a crossed architecture. When pressurized, air is applied to the pneumatic channels and the membrane is deflected at the intersection of the microchannels at the bottom layer, blocking the fluid flow.

Other commonly used microvalves are the so-called doormat valves (see N. Li et al. Parallel mixing of photolithographically defined nanoliter volumes using elastomeric microvalve arrays. Electrophoresis. Vol. 26(19), pp. 3758-64, Oct 2005*).* Doormat valves, which are typically of the NC type, may comprise a PDMS bilayer microfluidic chip, where a liquid flows inside a bottom layer, while an upper layer integrates an air network. In "off" position, the liquid channel is blocked by a PDMS barrier. When activated ("on" position), the latter can selectively compress and clog channels of the fluidic layer, enabling fluid motion control.

In contrast, passive microvalves (also referred to as check valves) are not so commonly used. These valves are incorporated in inlets and outlets and only open to forward pressure, significantly affecting the pumping performance of a reciprocal displacement (see *K. W. Oh and C. H. Ahn* cited above).

Other known alternatives for implementing NC microvalves comprise the use of sealing foils, as the ones described in patent EP 2805771 B1. This document discloses a LOC device comprising a NC valve, intended to store fluids as reagents in a long-term stable manner over periods of more than half a year. Said device comprises a first container storing a reagent, which is connected to a second container through a sealing foil that might break under pressure, thereby providing a fluidic microchannel between the two containers. The device further comprises an elastomeric membrane placed at the input of the second container, such that its deflection allows the reagent to pass from the first container to the second one. In this way, thanks to the controlled deflection of the membrane, it is possible to regulate the input flow to the second container. However, this valve does not regulate the flow at the fluidic outlet of the second container, which is associated with the volume of reagent dispensed by the device. Furthermore, the manufacturing process of this kind of devices is complex (due to the need of bonding materials of substantially different nature), and thus expensive and not suitable for mass-scale production.

The concept of a collapsible breaking point between two containers or reservoirs, acting as an NC valve, is also disclosed in patent EP 3393661 B1. This document refers to a microfluidic device for storing liquids or reagents in a long-term and stable manner. Said device comprises a fluid chamber for housing a reagent; a cover with a punch opening; a flexible membrane separating the reagent chamber and the cover; and a punch or a plunger adapted to be inserted into the opening of the reagent chamber to deflect the membrane, providing an output for the reagent stored in the chamber. In this way, the release of the reagent is controlled by means of a mechanical actuator (a punch or a plunger). Likewise, the process can be reversible -once the pressure on the membrane ceases, it retracts to its initial position- or irreversible. However, the design and manufacturing of this kind of devices is also complex and not suitable for mass-scale production.

In view of the above limitations of the prior-art microvalves, there exists a need for microfluidic devices which can store and controllably release a liquid into a microfluidic circuit with high precision but being easy to manufacture and without requiring the need of bonding materials of different natures. The present invention provides a solution to these limitations, through a novel NC monolithic valve for microfluidic applications, with the added functionality of being suitable (but not restricted to) to store liquids while keeping its valving properties. Such dual behaviour is intrinsically associated both to its unique design and its monolithic manufacturing process, by using materials of similar nature.

### BRIEF DESCRIPTION OF THE INVENTION

With the aim of solving the above-referred problems, a first object of the invention refers to an NC microfluidic valve comprising:
- a reservoir adapted for storing a fluid;
- a fluidic outlet adapted for its connection with the reservoir in an open position of the valve; and
- a barrier adapted for separating the reservoir and the outlet in a closed position of the valve.

Advantageously in the invention, the barrier is monolithically attached to the reservoir and the outlet, forming part of the same structure thereof, and the barrier is adapted such that it can be at least partly broken through delamination by an inlet threshold pressure value exerted by a compressed fluid stored in the reservoir. Within the scope of interpretation of the invention, a monolithic barrier is understood as being manufactured in a single piece with the reservoir and the outlet and comprising the same material. Therefore, a monolithic barrier can be viewed as a portion or a protrusion of the structure defining the reservoir and/or the outlet.

As an inlet pressure is applied to the reservoir (for example, by exerting a force through a flexible membrane, a pump, or a plunger connecter to the reservoir), the stored fluid will transmit the pressure force to the walls of the reservoir, including the barrier. As this barrier is structurally the weakest part of the reservoir, at some threshold pressure it will break, thus communicating the reservoir with the outlet and configuring the valve in its open position. The pressure causes a gradual delamination of the lower substrate around the perimeter of the valve and, at the threshold pressure, the total delamination of the barrier between the two occurs, opening the valve and causing the fluid flow into the outlet. Thereby, the release of the fluid inside the reservoir can be controlled with high precision.

In a preferred embodiment of the invention, the barrier forms a single piece with the reservoir and the outlet and comprises a same manufacturing material. More preferably, the barrier is a protrusion of the structure defining the reservoir and/or the outlet.

In a further preferred embodiment of the invention, the reservoir, the fluidic outlet, and the barrier are arranged on a substrate, for example a rigid or a flexible layer or plate material.

In a further preferred embodiment of the invention, the fluidic outlet comprises a microfluidic channel, a chamber, a well and, or a microfluidic circuit connected to the reservoir.

In a further preferred embodiment of the invention, the reservoir is connected to a flexible membrane, a pump, or a plunger adapted for compressing a fluid and transmitting a compression pressure force to the barrier.

In a further preferred embodiment of the invention:
- the valve is of single use, and the barrier is irreversibly broken when the inlet pressure exceeds the threshold value; or
- the valve is multi-use, and the barrier comprises a self-sealing material that allows said barrier to seal again after its delamination, in closed position of the valve.

Therefore, and even though the first object of the invention will be generally referred to as an NC valve, this term will be understood as applied to both single-use valves (for example, initially closed valves whose opening mechanism is preferably irreversible) and to multi-use valves (for example, normally closed valves whose opening mechanism is preferably reversible and can be closed again after their opening). In other words, the term "NC valve" will be understood as applied to any valve whose manufacturing default position is closed, wherein the fluid is contained inside the reservoir, and the barrier prevents its flow into the fluidic outlet.

In a further preferred embodiment of the invention, the barrier comprises a plurality of layers of increasing and/or decreasing size. This enables the functional design of barriers suitable for specific applications of microfluidic flow-control actuators and devices.

A second object of the invention refers to a microfluidic system comprising an NC valve according to any of the embodiments described in this document, in combination with an NO valve, which is connected to the NC valve through the fluidic outlet. The combination of an NC valve and an NO valve according to the system of the invention provides a safe and reliable means for storing liquid reagents in a microfluidic system and delivering them in a controllable way when required. The NO valve will be generally a mechanical, electromechanical or a chemical valve, without limitation to other NO valve technologies. In a preferred embodiment of the invention, the system further comprises an actuator coupled to the substrate by means of a movable actuation pin, wherein the substrate is, at least in part, flexible at a region in contact with the actuation pin. More preferably in the microfluidic system:
- the NO valve comprises a flow control chamber;
- the actuator is arranged below the flexible part of the substrate; and
- the actuator comprises a stepper motor connected to the pin, so as to move said pin upwards o downwards, thereby deforming or releasing said substrate and, thus, modifying the effective volume of the flow control chamber.

In a further preferred embodiment of the invention, the flow control chamber is connected to a flow control channel, which is aligned with the actuation pin and adapted such that, when the actuator deforms the flexible substrate by moving the pin, there is a position where the flow control channel becomes blocked and prevents the fluid to flow thereinto.

A third object of the invention refers to a manufacturing process of a valve according to any of the embodiments described in the present document, comprising the following steps:
- selecting a material for manufacturing the valve structure;
- defining a negative mould structure of a pattern formed by the reservoir, the outlet, and the barrier of the valve, wherein the glass transition temperature T_{g} of the negative mould structure is higher than the material used to obtain the valve structure;
- applying pressure and temperature close to the T_{g} of the valve structure material, until the valve structure is moulded.
- removing the negative from the moulded valve structure.

In a preferred embodiment of the process of the invention, the step of defining the negative of the pattern formed by the reservoir, the outlet and the barrier of the valve is carried out by using a negative tone UV-curable polymer, by mechanical milling, laser writing or chemical resists manufacturing.

In a further preferred embodiment of the process of the invention:
- the reservoir and/or the outlet structures are arranged in contact with the substrate, one or more of their corresponding contact surfaces undergo physical and/or chemical activation; and
- the valve structure formed by the reservoir, the barrier and/or the outlet are subject to pressure and/or plasma welding, until causing an irreversible bonding with the substrate.

### BRIEF DESCRIPTION OF THE DRAWINGS

To complete the description and to provide a better understanding of the invention, a set of drawings is enclosed. Said drawings form an integral part of the description and illustrate different preferred embodiments which should not be interpreted as restricting the scope of the invention, but just as an example of how the invention can be carried out. The drawings comprise the following figures:
Figure 1 shows a cross-view of an NC valve according to the invention, according to a preferred embodiment thereof, wherein the valve is in closed position.
Figure 2 shows a cross-view of an NC valve according to the invention, according to a preferred embodiment thereof, wherein the valve is in open position.
Figures 3a-3b show two positions of an inset of the barrier (a semi-adhered wall) displaying a possible configuration of said barrier while twisting after inlet pressure application.
Figure 4 illustrates two different section profiles of the barrier: a) decreasing, b) hourglass. These embodiments are tailored for providing a progressive breaking, depending on the pressure applied to the fluid stored in the reservoir.
Figure 5 shows a schematic representation of a steady-state condition of a microfluidic system according to the invention, under a preferred embodiment thereof comprising an NC valve connected to an NO valve.
Figure 6 shows the microfluidic system of Figure 5, wherein the liquid or reagent is stored in the reservoir of the NC valve, and a pin is actuated to block a chamber in the NO valve.
Figure 7 shows the microfluidic system of Figure 6, wherein the liquid or reagent is flowing from the reservoir to the NO valve chamber when the NC valve is open, due to its barrier breakdown, while the NO valve remains closed.
Figure 8 shows the microfluidic system of Figure 7, wherein the liquid or reagent stored in the reservoir is flowing from the NC valve to an exit flow control channel, while both the NC and the NO valves are open.

In the figures, the following reference numbers are used:

| | |
|---|---|
| 1 | Reservoir |
| 2 | Fluid |
| 3 | Fluidic outlet |
| 4 | Barrier |
| 5 | Substrate |
| 6 | Actuator |
| 7 | Pin |
| 8 | Flow control chamber |
| 9 | Flow control channel |

### DETAILED DESCRIPTION OF THE INVENTION

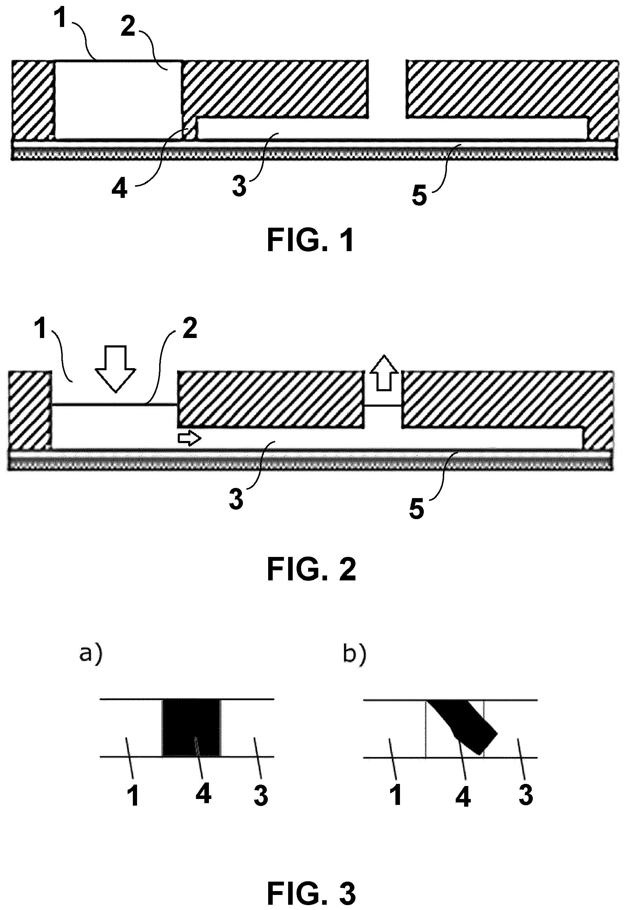

A first object of the invention relates to a NC microfluidic valve according to Figure 1. Said microfluidic valve comprises a reservoir (1) adapted for storing a fluid (2) (for example, a liquid reagent), and a fluidic outlet (3) adapted for its connection with the reservoir (1) when the valve is open. Even though the examples included in this document will refer generally to a fluidic outlet (3), this term will be understood as any volume adapted for conducting the liquid stored in the reservoir (1), such as a microfluidic channel, a chamber, a well and, in general, to any microfluidic circuit connected upstream to the reservoir (1).

The closed configuration of the valve is achieved by means of a barrier (4) separating the reservoir (1) and the outlet (3). Advantageously in the invention, this barrier (4) is monolithically attached to the reservoir (1), forming part of the same structure thereof. Within the scope of interpretation of the invention, a monolithic barrier (4) is understood as being manufactured in a single piece with the reservoir (1) and the outlet (3) and comprising the same material. Therefore, a monolithic barrier (4) can be viewed as a portion or a protrusion of the structure defining the reservoir (1) and/or the outlet (3). In the example of Figure 1, this structure is arranged on a substrate (5) (for example, a rigid or flexible sealing foil), which closes the reservoir (1) and the outlet (3) at their lower regions. However, other configurations are also possible within the scope of the invention, for example by manufacturing closed reservoir (1) and outlet (3) structures of the same material, separated by a monolithic barrier (4).

The principle of operation of the valve according to the invention is as follows. Firstly, an inlet pressure is applied to the reservoir (1) (for example, by exerting a force through a flexible membrane, a pump, or a plunger connected to the reservoir (1)). As a result, the stored fluid (2) will transmit the pressure to the walls of the reservoir (1), including the barrier (4). As this barrier (4) is structurally the weakest part of the NC valve, at some threshold pressure it will break, thus communicating the reservoir (1) with the outlet (3) and configuring the valve in its open position (Figure 2). The pressure causes a gradual delamination of the lower substrate (5) (for example, a sealing foil) around the perimeter of the valve and, at the threshold pressure, the total delamination of the barrier (4) between the two occurs, opening the valve and causing the fluid (2) flow into the outlet (3).

The manufacturing process of the valves according to the invention preferably comprises defining a negative mould structure of the pattern formed by the reservoir (1), the outlet (3) and the barrier (4). In a preferred embodiment of said process, this can be done by using a negative tone UV-curable polymer. Other technologies, such as additive manufacturing or milling are also suitable for obtaining the here presented valves . For this purpose, the glass transition temperature T_{g} of the negative mould structure will be higher than the material used to obtain the valve structure (typically a polymer material). By applying pressure (preferably between 2 and 6 bar) and temperature close to the T_{g} of the valve material, replica moulding with high fidelity is obtained. In addition, the shape of the microvalves according to the invention can have nearly any arbitrary shape starting with a multi-layered master mould to obtain its replica in polymer, such as poly methyl methacrylate (PMMA), polystyrene (PS), polycarbonate (PC), cyclic olefin polymer (COP) or copolymer (COC), or other elastomeric and/or thermoplastic materials.

Once the valve is obtained by moulding, its patterned layer structure is removed from the mould. To close the reservoir (1) and/or the outlet (3) structures, they are arranged in contact with the substrate (5) of either the same material or a different one, where one or more of their contact surfaces undergo physical (plasma) and/or chemical activation. Once in contact, the valve structure (formed by the reservoir (1), the barrier (4) and the outlet (3)) and the substrate (5) are irreversibly bonded (for example, being subject to pressure) and thereby finalizing the valve's fabrication process. Alternative methods for sealing the valve structure and the substrate (5) can also be used, such as by plasma welding.

Even though the simplest embodiments of the valve according to the invention correspond to a single-use valve in which the barrier (4) is irreversibly broken when the inlet pressure exceeds a threshold value, in alternative preferred embodiments the barrier (4) can further comprise a self-sealing material that can be controlled through temperature or ultraviolet radiation, such that it allows the barrier (4) to seal again after its delamination. In this way, a multi-use reversible microfluidic valve can be obtained.

Depending on the geometry and material of the barrier (4), it can completely tear apart when sufficient inlet pressure is applied or, alternatively, it is only partially broken, as shown in Figure 3. Figure 3a corresponds to a closed position of the valve with no pressure applied to the reservoir (1). In Figure 3b, the barrier (4) undergoes a torsion and/or a flexion when inlet pressure is exerted, but a portion of said barrier (2) remains adhered to a thicker section of the reservoir (1) or the fluidic outlet (3). This provides a further functional advantage to the invention, especially for its application to cell cultures (but without limitation to other applications). In this case, the barrier (4) is not completely dragged by the flow of the fluid (2), thereby avoiding the potential contamination of the culture. As shown in Figure 3b, different sections of the barrier (4) can be shifted or behave in a different manner, which allows a more precise control of the fluid (2) once the valve is open, since the barrier (4) is not completely detached, and its position can be controlled by varying the applied inlet pressure. In different embodiments of the invention, when the inlet pressure ends, the barrier (4) can return to its closed position (like in a curtain valve) and clog the passage between the reservoir (1) and the fluidic outlet (3). Alternatively, the barrier (4) can return to a partly sealed position, regulating the passage of fluid due to the adherence between the barrier (4) and the substrate (5), or to the physical space occupied by the barrier (4) inside the passage between the reservoir (1) and the fluidic outlet (3).

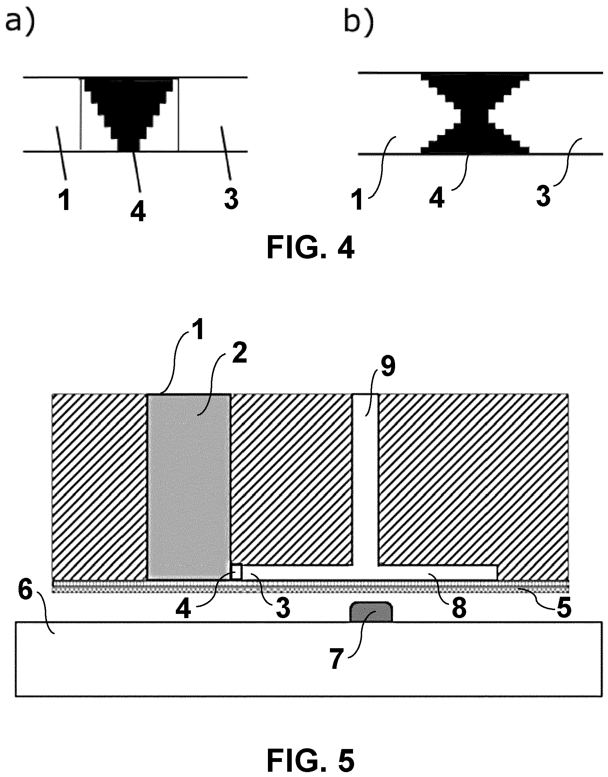

Other preferred embodiments of the barrier (4) exhibit an asymmetric or symmetric section profiles. For example, the barrier can be formed of a plurality of increasing and/or decreasing layers, as shown in Figure 4a. By adjusting the width and the form of the barrier (4), its breakdown conditions can be further controlled. When the traverse section of the barrier (4) has an increasing/decreasing width, its torsion in the flow direction that each portion of said barrier (2) undergoes is different in the regions closer to the substrate (5), thus providing a gradual twist which triggers a progressive opening of the microfluidic outlet (3).

Other embodiments of the barrier (4) can exhibit a narrowing in the central part thereof, like the symmetric hourglass structure shown in Figure 4b. Hourglass barriers (4) can be designed symmetrically or asymmetrically, by varying the height and width of each of their layers. This allows further means for controlling the rupture point of the barrier (4) and accurately regulating the fluid's flow volume. This barrier (4) can be used in applications requiring a precise release of a first fluid within a second fluid, without touching said second fluid to prevent possible contamination, as it is often demanded in cell culture applications. For instance, for releasing a fluid (e.g., H₂O or phosphate-buffered saline, PBS, solution) into a cell culture that exhibits a protective oil layer. In this case, when it comes to replace the surrounding medium of such a cell culture, it is convenient to renew the medium without affecting the oil layer. Thanks to a stepped profile, the barrier (4) may break in the middle region communicating the reservoir (1) and the outlet (3), but the rest of the barrier (4) remains structurally intact. The advantage of this stepper barrier (4) is that, for specific embodiments of the invention, it provides an effective microfluidic passage of a narrower section, thereby allowing a more precise fluid release and, at the same time, it avoids mixing different reagents in the cell culture. If the inlet pressure is higher, then it may happen that a wider portion of the stepper barrier (4) can break, thus enabling a microfluidic channel of larger effective section and a greater fluid volume. In this way, the fluid volume released can be controlled depending on the inlet pressure. This enables the valve of the invention for its use in metering applications as the output flow is regulated by said inlet pressure.

A second object of the invention refers to a microfluidic system comprising an NC valve according to any of the embodiments described in the present document, in combination with an NO valve (for example, an electromechanically, mechanically, or chemically actuated NO valve, without limitation to other actuation technologies.). This system allows for a precise flow control in the valve's outlet (3). For this purpose, the microfluidic system further comprises an actuator (6) coupled to the substrate (5) by means of a movable actuation pin (7). In other embodiments, the actuator (6) can comprise a cantilever, a cylinder, or a plunger (which will be understood as comprised in the scope of interpretation of the term "actuation pin"). Moreover, the substrate (5) is, at least in part, flexible at the region in contact with the actuation pin (7) (for example, the substrate (5) can be made of cyclic olefin copolymer (COC), acting as a flexible membrane defining a flow control chamber (8) of the NO valve of the system, without limitation to other flexible polymers).

An example of this microfluidic system according to a preferred embodiment of the invention is shown in Figures 5-8, where the actuator (6) is arranged below the flexible substrate (5). In order to operate the valve, the actuator (6) can comprise a stepper motor connected to the pin (7), so as to move it upwards o downwards, thereby deforming or releasing the flexible membrane formed by the substrate (5) and, thus, modifying the effective volume of the flow control chamber (8). Advantageously in the NO valve of the system, the flow control chamber (8) is connected to a flow control channel (9), which is preferably aligned with the actuation pin (7) and adapted such that, when the actuator (6) deforms the flexible substrate (5) by moving the pin (7), there is a position where the flow control channel (9) becomes blocked and prevents the fluid (2) to flow thereinto. Therefore, by controlling the aperture of the flow control channel (9) by means of the actuator (6), the fluid can be released with improved precision. Moreover, the combination of an NC valve and an NO valve according to the system of the invention provides a safe and reliable means for storing liquid reagents in a microfluidic system and delivering them when required in a controllable way.

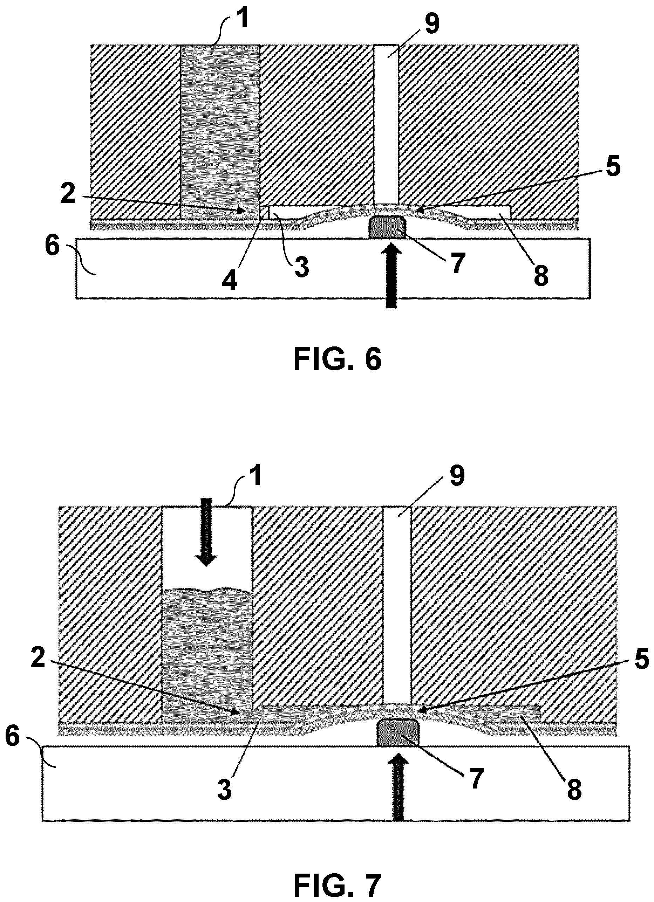

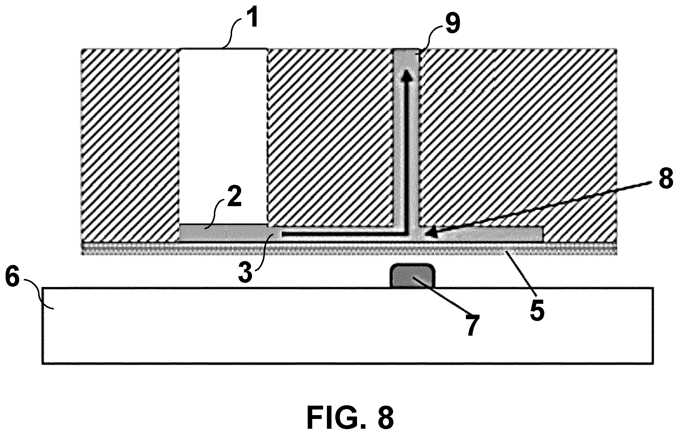

As detailed in Figures 5-8, the operating principle of the microfluidic system of the invention is described below, and comprises four main steps a)-d), performed in any technically possible order:
a) In steady-state condition, the liquid or reagent dispensed with the system is stored in the reservoir (1) of the NC valve in closed position closed (i.e., with the barrier (4) blocking the passage of fluid between the reservoir (1) and the outlet (3), and the pin (7) is in downward position (so that the NO valve is in open position), as illustrated in Figure 5.
b) The actuator (6) is switched on and pin (7) is moved upwards. The passage of fluid into the flow control channel (9) is thus controlled by blocking said channel (9) with the flexible substrate (5), so that the fluidic connection with the flow control chamber (8) is also blocked, as shown in Figure 6.
c) Inlet pressure is applied in the reservoir (1) where the fluid (for example, a liquid reagent) is stored. The pressure causes the start of a gradual delamination of the contact region between the barrier (4) and the substrate (5). At a certain threshold pressure, the total delamination of the barrier (4) occurs, opening the region comprised between the two valves. Thus, the NC valve opens and the fluid (2) flows into the intermediate chamber (8) through the outlet (3). As in the previous step, the pin (7) remains in its upward position to block the flow control channel (9) and the fluid (2) is retained in the flow control chamber (8) of the NO valve, as displayed in Figure 7.
d) Once the NC valve has been opened and the fluid (2) has passed to the flow control chamber (8), said liquid or reagent can be dispensed by moving the pin (7) downward, as presented in Figure 8. If the actuator (6) is operated in a controlled manner, a highly reliable release of the liquid can be achieved. Alternatively, the pressure at the NC valve can be switched off, and then the NO valve can be opened, and a proper control inlet pressure can be used to control the flow rate of the fluid (2). By adjusting the force exerted by the actuator (6) and its speed during the switching (when the pin (7) is moved upward and downward), a controlled fluid dispensing process can be carried out.

In different embodiments of the invention, by adjusting the geometry of the barrier (4) (i.e., its width and height), as well as by controlling the chemical bonding conditions for its sealing with the substrate (5), the inlet pneumatic pressure at which the barrier (4) breaks can be adjusted. When stopping the pressure at the inlet once the NC valve has been opened and opening the NO valve, a controlled dispensing process can be achieved.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. Normally-closed microfluidic valve comprising:
- a reservoir (1) adapted for storing a fluid (2);
- a fluidic outlet (3) adapted for its connection with the reservoir (1) in an open position of the valve;
- a barrier (4) adapted for separating the reservoir (1) and the outlet (3) in a closed position of the valve;
**characterised in that** the barrier (4) is monolithically attached to the reservoir (1) and the outlet (3), forming part of the same structure thereof,
and wherein the barrier (4) is adapted such that it can be at least partly broken through delamination at an inlet threshold pressure value exerted by the fluid (2) stored in the reservoir (1), when said fluid (2) is subject to pressure.

2. Valve according to the preceding claim, wherein the barrier (4) forms a single piece with the reservoir (1) and the outlet (3) and comprises a same manufacturing material.

3. Valve according to any of the preceding claims, wherein the barrier (4) is a protrusion of the structure defining the reservoir (1) and/or the outlet (3).

4. Valve according to any of the preceding claims, wherein the fluidic outlet (3) comprises a microfluidic channel, a chamber, a well and, or a microfluidic circuit connected to the reservoir (1).

5. Valve according to any of the preceding claims, wherein the reservoir (1) is connected to a flexible membrane, a pump, or a plunger adapted for applying pressure to a fluid (2) and transmitting said pressure to the barrier (4).

6. Valve according to any of the preceding claims, wherein:
- said valve is of single use, and the barrier (4) is irreversibly broken when the inlet pressure exceeds the threshold value; or
- the valve is multi-use, and the barrier (4) comprises a self-sealing material that allows said barrier (4) to seal again after its delamination in a closed position of the valve.

7. Valve according to any of the preceding claims, wherein the barrier (4) comprises a plurality of layers of increasing and/or decreasing size.

8. Valve according to any of the preceding claims, wherein the reservoir (1), the fluidic outlet (3) and the barrier (4) are arranged on a substrate (5).

9. Microfluidic system comprising a normally-closed valve according to the preceding claim, in combination with a normally-open valve connected to the normally-closed valve through the fluidic outlet (3).

10. System according to the preceding claim, further comprising an actuator (6) coupled to the substrate (5) by means of a movable actuation pin (7), and wherein the substrate (5) is, at least in part, flexible at a region in contact with the actuation pin (7).

11. System according to the preceding claim, wherein:
- the normally-open valve comprises a flow control chamber (8);
- the actuator (6) is arranged below the flexible part of the substrate (5);
- the actuator (6) comprises a stepper motor connected to the pin (7), so as to move said pin (7) upwards o downwards, thereby deforming or releasing said substrate (5) and, thus, modifying the effective volume of the flow control chamber (8).

12. System according to the preceding claim, wherein the flow control chamber (8) is connected to a flow control channel (9), which is aligned with the actuation pin (7) and adapted such that, when the actuator (6) deforms the flexible substrate (5) by moving the pin (7), there is a position wherein the flow control channel (9) becomes blocked and prevents the fluid (2) to flow thereinto.

13. Manufacturing process of a valve according to claim 1, comprising:
- selecting a material for manufacturing the valve structure;
- defining a negative mould structure of a pattern formed by the reservoir (1), the outlet (3) and the barrier (4) of the valve, wherein the glass transition temperature T_{g} of the negative mould structure is higher than the material used to obtain the valve structure;
- applying pressure and temperature close to the T_{g} of the valve structure material, until the valve structure is moulded.
- removing the negative from the moulded valve structure.

14. Process according to the preceding claim, wherein the step of defining the negative of the pattern formed by the reservoir (1), the outlet (3) and the barrier (4) of the valve is carried out by using a negative tone UV-curable polymer, by mechanical milling, laser writing or chemical resists manufacturing.

15. Process according to any of claims 13-14 wherein:
- the reservoir (1) and/or the outlet (3) structures are arranged in contact with a substrate (5), and one or more of their corresponding contact surfaces undergo physical and/or chemical activation; and
- the valve structure formed by the reservoir (1), the barrier (3) and/or the outlet (4) are subject to pressure and/or plasma welding, until causing an irreversible bonding with the substrate (5).
